(19) Europäisches Patentamt
European Patent Office
Office européen des brevets

(11) **EP 3 847 450 B1**

(12) **FASCICULE DE BREVET EUROPEEN**

(45) Date de publication et mention de la délivrance du brevet:
**30.03.2022 Bulletin 2022/13**

(21) Numéro de dépôt: **19779536.2**

(22) Date de dépôt: **02.09.2019**

(51) Classification Internationale des Brevets (IPC):
**G01N 29/04** *(2006.01)*     **G01N 29/26** *(2006.01)*

(52) Classification Coopérative des Brevets (CPC):
**G01N 29/043; G01N 29/262;** G01N 2291/106

(86) Numéro de dépôt international:
**PCT/FR2019/052016**

(87) Numéro de publication internationale:
**WO 2020/049247 (12.03.2020 Gazette 2020/11)**

(54) **PROCEDE DE DETECTION ET DE CARACTERISATION PAR ULTRASONS DE DEFAUTS DANS UN MATERIAU HETEROGENE**

VERFAHREN ZUR ULTRASCHALLDETEKTION UND CHARAKTERISIERUNG VON DEFEKTEN IN EINEM HETEROGENEN MATERIAL

METHOD FOR ULTRASOUND DETECTION AND CHARACTERISATION OF DEFECTS IN A HETEROGENEOUS MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2018 FR 1857907**

(43) Date de publication de la demande:
**14.07.2021 Bulletin 2021/28**

(73) Titulaire: **Electricité de France**
**75008 Paris (FR)**

(72) Inventeurs:
• **KASSIS, Paul**
**75017 PARIS (FR)**
• **PAUL, Nicolas**
**93100 MONTREUIL (FR)**

(74) Mandataire: **Regimbeau**
**20, rue de Chazelles**
**75847 Paris Cedex 17 (FR)**

(56) Documents cités:
WO-A1-2016/083759

• NJIKI MICKAEL ET AL: "Total focusing method for non destructive evaluation: Toward real-time imaging systems", 2013 IEEE 56TH INTERNATIONAL MIDWEST SYMPOSIUM ON CIRCUITS AND SYSTEMS (MWSCAS), IEEE, 4 août 2013 (2013-08-04), pages 1164-1167, XP032525499, ISSN: 1548-3746, DOI: 10.1109/MWSCAS.2013.6674860 ISBN: 978-1-4799-4134-6 [extrait le 2013-11-24]
• SAHI B ET AL: "Some imaging strategies in multi-angle spatial compounding", PROCEEDINGS / 2000 IEEE ULTRASONICS SYMPOSIUM : OCTOBER 22 - 25, 2000, HOTEL CARIBE HILTON, SAN JUAN, PUERTO RICO ; AN INTERNATIONAL SYMPOSIUM, IEEE SERVICE CENTER, PISCATAWAY, NJ, vol. 2, 22 octobre 2000 (2000-10-22), pages 1615-1618, XP010540924, ISBN: 978-0-7803-6365-6

**Description**

DOMAINE TECHNIQUE GENERAL ET CONTEXTE DE L'INVENTION

La présente invention concerne le contrôle non destructif de matériaux, et plus précisément la détection et la caractérisation par ultrasons de défauts dans un matériau hétérogène.

Les ultrasons sont couramment utilisés pour la mise en oeuvre de contrôles non destructifs de matériaux. On utilise pour ce faire un transducteur ultrasonore placé à la surface du matériau à examiner, qui émet des ondes ultrasonores dans le matériau. Ces ondes se propagent dans le matériau et sont réfléchies par celui-ci en fonction de sa structure. Le transducteur reçoit ces ondes réfléchies, et leur analyse permet de détecter d'éventuels défauts dans le matériau.

Cependant, pour un matériau hétérogène, c'est-à-dire un matériau polycristallin dont la taille de grain est de l'ordre de la longueur d'onde ultrasonore dans ce matériau, le phénomène de diffusion de l'onde ultrasonore par la structure du matériau devient prépondérant. Cette diffusion peut alors conduire à la génération d'un bruit de structure, c'est-à-dire à un signal ultrasonore d'amplitude non négligeable reçu par le transducteur et présentant des caractéristiques semblables à celles qu'émettrait une onde réfléchie par un défaut, entraînant ainsi une détérioration de la capacité de détection des défauts réellement présents dans le matériau.

En effet, dans la mesure où le bruit de structure présente des caractéristiques temporelles et spectrales similaires à celles des signatures de défaut constituant le signal utile, les approches classiques de traitement des signaux ultrasonores, par filtrage temporel ou fréquentiel, déconvolution ou projection sur des bases d'ondelettes s'avèrent inefficaces.

La demande de brevet US 2007/0006651 A1 décrit un procédé de contrôle non destructif au moyen d'ondes ultrasonores, basé sur la comparaison de l'amplitude du spectre fréquentiel d'une sélection du signal avec une amplitude de référence. Cette demande mentionne la possibilité d'effectuer les mesures à différentes positions et évoque la combinaison de ces mesures pour obtenir un signal de mesure moyen au sens spatial. Cependant, un tel procédé ne donne pas entièrement satisfaction, et le signal reste entaché de bruit.

La demande de brevet WO2016083759 décrit un procédé de détection et de caractérisation par ultrasons de défauts dans un matériau hétérogène, comprenant les étapes suivantes :

- émission d'ultrasons à partir d'un transducteur émetteur ultrasonore placé contre le matériau,
- acquisition par un transducteur récepteur ultrasonore en différentes positions par rapport audit matériau d'une pluralité de signaux temporels représentatifs de l'amplitude des ultrasons propagés dans le matériau en fonction du temps pour une position du transducteur récepteur ultrasonore,
- détermination d'une fonction temporelle représentative d'une puissance spatialement moyenne des signaux temporels correspondant à différentes positions du transducteur récepteur ultrasonore, la fonction temporelle représentative de la puissance spatialement moyenne des signaux temporels étant de formule générale :

$$f(t) = \left( \beta \sum_z |x(z,t) - m(t)|^\alpha \right)^\gamma$$

avec $\alpha$, $\beta$ et $\gamma$ différents de zéro, x(z,t) le signal temporel représentatif de l'amplitude du son propagé dans le matériau en fonction du temps pour une position z du transducteur récepteur ultrasonore, et m(t) une fonction du temps,

- normalisation des signaux temporels au moyen de ladite fonction temporelle pour obtenir des signaux temporels normalisés,
- détection et caractérisation des défauts du matériau à partir desdits signaux temporels normalisés.

La demande de brevet WO2016083759 décrit ainsi un pré-traitement exploitant une fonction temporelle représentative d'une puissance spatialement moyenne des signaux temporels correspondant à différentes positions du transducteur récepteur ultrasonore. Un tel pré-traitement permet d'améliorer la détection et caractérisation des défauts dans le matériau en homogénéisant les signaux traités, afin que les statistiques de bruit soient similaires aux différents endroits de mesure, facilitant la détection d'un niveau de signal anormal. Néanmoins, le bruit de mesure existe encore et peut parfois limiter les capacités de détection et de caractérisation d'un défaut.

De fait, le procédé n'exploite pas toutes les capacités d'une sonde multi-élément comprenant une pluralité de transducteurs, fonctionnant en émetteur ou en récepteur. En effet, l'acquisition de signaux de mesure au moyen d'une telle sonde multi-élément fait naître des caractéristiques supplémentaires dans le signal de mesure qui peuvent être exploitée pour améliorer encore la détection et caractérisation des défauts dans le matériau.

PRESENTATION DE L'INVENTION

La présente invention a pour but de proposer un procédé de détection par ultrasons de défauts dans un matériau hétérogène qui permettent de réduire l'influence du bruit de structure qui entache les données récoltées.

A cet effet, il est proposé un procédé de détection et de caractérisation par ultrasons de défauts dans un matériau hétérogène, comprenant les étapes suivantes :

a) pour chacune d'une pluralité de positions à la surface du matériau,

- une sonde multi-élément comprenant une pluralité de transducteurs est disposée à la position à la surface du matériau ;
- pour une pluralité de configurations de la sonde multi-élément, des ultrasons sont émis par au moins un transducteur émetteur et au moins un transducteur récepteur acquiert un signal de mesure représentatif de l'amplitude des ultrasons propagés dans le matériau en fonction du temps pour cette configuration de sonde à cette position, les différentes configurations se distinguent entre elles par des retards différents appliqués à l'émission d'ondes ultrasonores par les transducteurs ou par des fonctions d'émetteur ou de récepteur remplies par différents transducteurs,

b) mise en oeuvre d'un algorithme de focalisation sur un ensemble de données de mesure regroupant les signaux de mesure pour les différentes configurations de la sonde multi-élément pour chaque position de la sonde multi-élément, et obtention pour chaque position de sonde d'une image dans laquelle chaque pixel de l'image représente un point sondé du matériau auquel est associé une amplitude focalisée pour ledit point sondé sur différentes positions de sonde,

c) pour chaque point sondé, détermination d'une mesure de tendance centrale de l'amplitude focalisée au niveau du point sondé sur différentes positions de sonde,

d) pour chaque point sondé, détermination d'une fonction représentative de la variabilité de l'amplitude focalisée au niveau de ce point sondé sur différentes positions de sonde,

e) pour chaque image, correction de l'amplitude focalisée en chaque point sondé en soustrayant à l'amplitude la mesure de la tendance centrale et en divisant par la fonction représentative de la variabilité, pour obtenir des images corrigées,

f) détection et caractérisation des défauts du matériau à partir des images corrigées.

L'invention est avantageusement complétée par les caractéristiques suivantes, prises seules ou en une quelconque de leur combinaison techniquement possible :

- les différentes configurations se distinguent entre elles par des fonctions d'émetteur ou de récepteur remplies par différents transducteurs, et l'algorithme de focalisation est un algorithme de focalisation en tout point ;
- les différentes configurations se distinguent entre elles par différents décalages temporels entre transducteurs appliqués à l'émission d'ondes ultrasonores par les transducteurs, et l'algorithme de focalisation est une imagerie par onde plane ;
- la mesure de la tendance centrale est une moyenne ou une médiane ;
- la mesure de la tendance centrale est une moyenne A(w) de formule générale :

$$A(w) = \beta \left( \sum_{i=1}^{N_s} \sum_{w_j \in V_w} I(\boldsymbol{z_i}, \boldsymbol{w_j}) \right)$$

avec $N_s$ un nombre d'images de différentes positions de sonde prises en compte, Ns étant supérieur à 2, $V_w$ un ensemble de points autour du point w qui peut être réduit au point w, $I(\boldsymbol{z_i}, \boldsymbol{w_j})$ étant l'amplitude ou la valeur absolue de l'amplitude focalisée à la position de sonde $\boldsymbol{z_i}$; pour le point $\boldsymbol{w_j}$, avec de préférence, $\beta = \frac{1}{N_s}$ ou $\beta = \frac{1}{N_s}\frac{1}{N_V}$ ou $\beta = 1$, avec $N_V$ le cardinal de l'ensemble de points $V_w$ ;

- la mesure de la tendance centrale est une moyenne A(w) de formule générale :

$$A(w) = \frac{1}{N_s}\frac{1}{N_V}\sum_{i=1}^{N_s}\sum_{w_j \in V_w}\left|I(z_i, w_j)\right|$$

avec $N_s$ un nombre d'images de différentes positions de sonde prises en compte, Ns étant supérieur à 2, $V_w$ un ensemble de points autour du point w qui peut être réduit au point w, $I(z_i, w_j)$ étant l'amplitude à la position de sonde $z_i$, pour le point sondé $w_j$, et $N_V$ le cardinal de l'ensemble de points $V_w$ ;

- la fonction B(w) représentative de la variabilité de l'amplitude pour ce point sondé w sur les différentes positions de sonde, est de formule générale

$$B(w) = \left(\beta'\sum_{i=1}^{N_s'}\sum_{w_j \in V_w'}\left|I(z_i, w_j) - A(w)\right|^{\propto'}\right)^{\gamma'}$$

avec $\propto'$, $\beta'$ et $\gamma'$ différents de zéro, $N_s'$ un nombre d'images de différentes positions de sonde, $V_w'$ un ensemble de points autour du point w qui peut être réduit au point w, et A(w) la mesure de la tendance centrale, et de préférence :

- soit A(w) est la moyenne, soit A(w) est la médiane sur l'ensemble de points $V_w$, et
- soit $\propto'$=2 et y'=0,5, soit $\propto'$=1 et $\gamma'$=1, et
- $\beta' = \frac{1}{N_s'}$ ou $\beta' = \frac{1}{N_s'-1}$ ou $\beta' = \frac{1}{N_s'}\frac{1}{N_V'}$ ou $\beta = 1$, avec $N_s'$ le nombre de positions z prises en compte, $N_s'$ étant supérieur à 2, et $N_V'$ le cardinal de l'ensemble $V_w'$ de points autour du point w ;

- la fonction B(w) représentative de la variabilité de l'amplitude au niveau de ce point sondé sur les différentes positions de sonde est de formule générale

$$B(w) = \sqrt{\frac{1}{N_s}\frac{1}{N_V}\sum_{i=1}^{N_s}\sum_{w_j \in V_w}\left|\left|I(z_i, w_j)\right| - A(w)\right|^2}$$

avec $N_s$ un nombre d'images de différentes positions de sonde, $V_w$ un ensemble de points autour du point sondé w qui peut être réduit au point sondé w, $I(z_i, w_j)$ étant l'amplitude focalisée à la position de sonde $z_i$ pour le point sondé $w_j$, $N_V$ le cardinal de $V_w$, et A(w) une mesure de tendance centrale de l'amplitude focalisée au niveau du point sondé sur différentes positions de sonde ; - la détection des défauts comprend une étape de filtrage spatial d'au moins une image corrigée au moyen d'un filtre bilatéral, et de comparaison avec un seuil.

L'invention concerne également un produit programme d'ordinateur comprenant des instructions de code de programme pour l'exécution du procédé selon l'invention lorsque ledit programme est exécuté sur un ordinateur. De préférence, le produit programme d'ordinateur prend la forme d'un support tangible non-transitoire lisible par ordinateur, sur lequel sont stockées des instructions de code de programme pour l'exécution du procédé selon l'invention lorsque le support est lu par un ordinateur.

PRESENTATION DES FIGURES

L'invention sera mieux comprise, grâce à la description ci-après, qui se rapporte à un exemple de réalisation préféré, donné à titre d'exemple non limitatif et expliqué avec référence aux dessins schématiques annexés, dans lesquels :

- la figure 1 illustre l'inspection d'un tube par une sonde multi-élément;

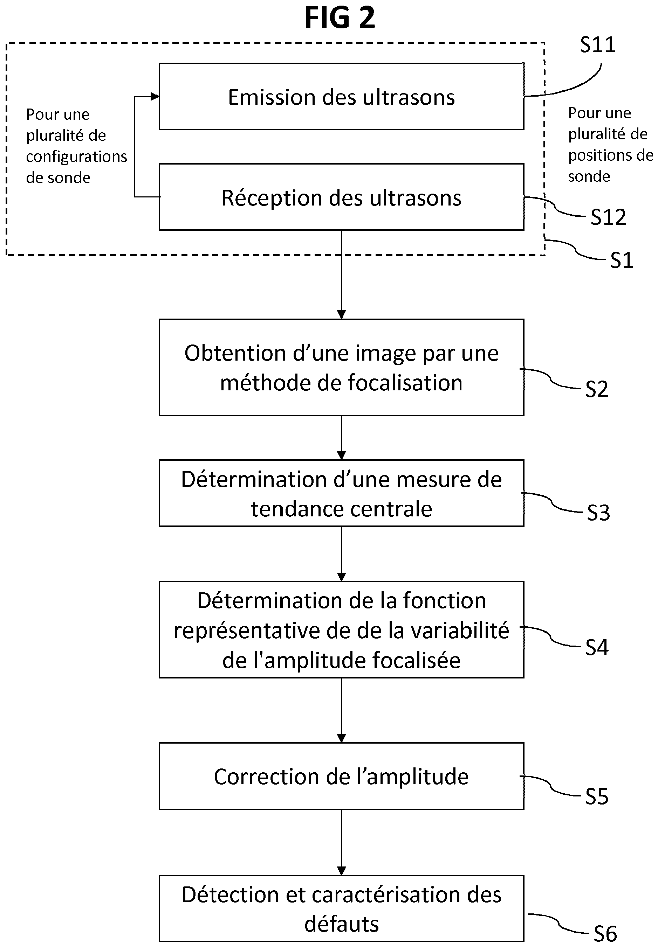

- la figure 2 est un diagramme illustrant schématiquement des étapes du procédé selon un mode de réalisation possible de l'invention ;

- la figure 3a est un exemple d'une image résultant de la mise en oeuvre d'une méthode de focalisation en tout point sur un matériau hétérogène, avant la mise en oeuvre de la correction proposée par l'invention ;
- la figure 3b est un exemple d'une image corrigée par la mise en oeuvre de la correction proposée sur l'image de la figure 3a,
- la figure 3c est un exemple d'une image filtrée résultant d'un filtrage spatial au moyen d'un filtre bilatéral sur l'image corrigée de la figure 3b.

## DESCRIPTION DETAILLEE

A des fins d'illustration, la description qui suit sera faite dans le cadre du contrôle non destructif de tubes au moyen de transducteurs ultrasonores. Il arrive souvent que des structures telles que des tubes doivent être contrôlées avec de forte contrainte d'accessibilité dans un contexte industriel, par exemple pour des tubes disposés à l'intérieur d'autres structures. Ainsi, il est courant que des tubes ne puissent être contrôlés que de l'intérieur ou de l'extérieur, ce qui entraîne la nécessité d'inspecter en totalité l'épaisseur du tube depuis une seule face. Du fait que l'inspection ne peut être menée qu'à partir d'une seule face, la profondeur à inspecter s'en trouve alors augmentée, ce qui augmente également l'influence du bruit de structure.

Une telle acquisition des mesures des transducteurs est couramment effectuée, notamment pour la mise en oeuvre la technique dite de mesure du temps de trajet de diffraction, plus connue sous l'acronyme TOFD pour l'anglais "time of flight diffraction", dont le même protocole d'acquisition peut être mis en oeuvre pour la présente invention.

Un matériau courant pour les tubes est par exemple l'inconel, c'est-à-dire d'un alliage à base principalement de nickel, de chrome, de fer, et contenant également du cuivre, le manganèse et le molybdène, ainsi qu'éventuellement d'autres composants en quantité généralement moindre. Il s'agit d'un matériau hétérogène dont la structure présente des grains d'une taille comparable à la longueur d'onde des ondes ultrasonores employées dans les contrôles non destructifs. A titre d'exemple, la fréquence des ondes ultrasonores généralement utilisées en contrôle non destructif peut s'étendre de 0,1 à 50 MHz, la bande 2-10 MHz étant la plus usitée. La longueur d'onde, dans cette bande, est donc comprise pratiquement, pour des métaux tels que l'acier ou l'aluminium, entre 3 mm et 0,5 mm. Il est à noter que le procédé n'est pas nécessairement restreint à un matériau hétérogène, mais trouve là une application avantageuse.

Une première étape (étape S1) du procédé consiste à acquérir un ensemble de données de mesure regroupant un signal de mesure représentatif de l'amplitude des ultrasons propagés dans le matériau en fonction du temps pour plusieurs configurations de sonde à plusieurs positions d'une sonde multi-élément 1.

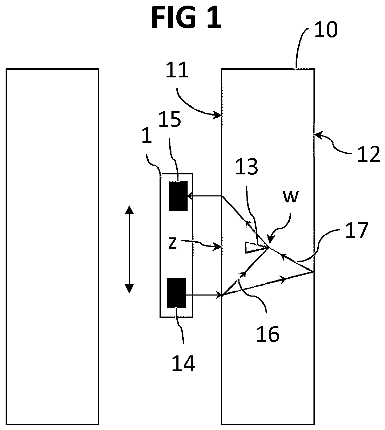

En référence à la figure 1, l'acquisition se fait au moyen d'une sonde multi-élément 1 comprenant une pluralité de transducteurs 14, 15. La sonde 1 est disposée en face de la paroi interne 11 de ce tube 10, à une position z. Le tube 10 présente un défaut 13, représenté ici sous la forme d'une entaille.

Dans un souci de simplification, seuls deux transducteurs 14, 15 sont ici illustrés. En réalité, les transducteurs 14, 15 sont plus nombreux et présentent une distribution spatiale variant en fonction des applications visées et des surfaces à inspecter. La distribution spatiale peut par exemple être matricielle, annulaire ou formant une barrette, pour les plus courants, ou présenter des motifs particuliers. La pluralité de transducteurs 14, 15 donne la possibilité de focaliser les ondes transmises dans la direction et à la profondeur souhaitées. Il est ainsi possible d'inspecter une pluralité de points sondés **w**. La distribution spatiale des transducteurs 14, 15 peut ne pas être plane, afin de se conformer à la surface à inspecter. Il est courant d'utiliser un milieu de couplage tel qu'un sabot ou une couche de gel de couplage, afin de favoriser la propagation des ultrasons entre les transducteurs 14, 15 et le matériau.

La sonde multi-élément 1 parcourt la surface du matériau à inspecter, et donc parcourt une pluralité de positions z à la surface du matériau. Par exemple la sonde multi-élément 1 peut parcourir la surface interne 11 du tube 10 de façon hélicoïdale. La position **z** de la sonde multi-élément 1 à la surface 11 du tube 10 peut par exemple être exprimée par une profondeur p et un angle θ, les positions **z** étant espacées par exemple de moins d'un millimètre en altitude et de quelques degrés (typiquement moins de deux degrés) en angle. D'autres façon d'exprimer la position **z** peuvent être utilisées en fonction de la conformation de la surface à inspecter. Dans le cas d'une surface plane, la position pourrait ainsi être exprimée avec une abscisse à la place de l'angle.

Lors d'un tir ultrasonore à une position **z** de la sonde multi-élément 1, un ou plusieurs transducteur émetteur 14 émettent (étape S11) des ondes ultrasonores qui pénètrent dans le tube 10 au niveau de sa paroi interne 11, puis se propagent dans le matériau dudit tube 10, avant d'être reçues par un autre transducteur 15, dit récepteur (étape S12). Afin d'illustrer la propagation des ondes ultrasonores dans le matériau, sur la figure 1 ont été représentés un premier trajet 16 constituant un chemin court pour les ondes ultrasonores, qui sont diffractées par le défaut 13 en direction du transducteurs récepteur 15, et un second trajet 17, constitue un chemin long pour les ondes ultrasonores, qui sont réfléchies par la paroi externe 12 du tube 10 en direction du défaut 13 puis rejoignent le transducteur récepteur 15.

A chaque position **z** de la sonde multi-élément 1, des signaux de mesure sont acquis selon différentes configurations de la sonde multi-élément 1. Ces différentes configurations peuvent varier entre elles par exemple par les rôles joués par chacun des transducteurs 14, 15. De fait, les transducteurs 14, 15, peuvent de préférence jouer alternativement le rôle d'émetteur ou le rôle de récepteur. Ainsi, lors d'une itération à une même position **z** de la sonde multi-élément 1, un transducteur 14, 15 peut être un émetteur, et devenir un récepteur lors d'une autre itération.

On obtient un ensemble de données de mesure regroupant le signal de mesure pour chaque configuration pour chaque position de sonde z. Plus précisément, pour chaque position de sonde z, on obtient une matrice d'acquisition de coefficients *x(z, n, i, j)* correspondant chacun à l'amplitude du signal de mesure x à l'instant *nTe* (*Te* étant la période d'échantillonnage) reçu par le transducteur *j* lorsque le transducteur *i* émet des ondes ultrasonores.

On met ensuite en oeuvre une méthode de focalisation sur l'ensemble de données, afin d'obtenir (étape S2) une image dans laquelle chaque pixel de l'image représente un point sondé **w** du matériau auquel est associé une amplitude focalisée pour ledit point sondé **w** sur différentes positions de sonde **z,** et qui n'est pas fonction du temps ou de la configuration de la sonde multi-élément 1 (c'est-à-dire indépendamment de quel transducteur 14, 15 fait office d'émetteur *i* ou de récepteur *j*). Le point sondé **w** est une position dans le matériau, qui peut s'exprimer par exemple comme un vecteur à deux ou trois coordonnées spatiales, typiquement exprimées dans un repère lié à la position z de la sonde multi-élément 1.

Une méthode de focalisation courante est la méthode de focalisation en tout point couramment désigné par l'acronyme TFM pour l'anglais "Total Focusing Method". Dans cette approche, les différentes configurations se distinguent entre elles par des fonctions d'émetteur ou de récepteur remplies par différents transducteurs 14, 15. Par exemple, dans une première configuration, un premier transducteur 14 (ou un premier ensemble de transducteurs 14) est excité individuellement avec un signal électrique impulsionnel afin d'émettre des ultrasons. Ces ultrasons se propagent dans le matériau, et sont acquis ensuite par tous les transducteurs 14, 15 (ou par un second ensemble de transducteurs 15). Ensuite, à la même position de sonde **z,** un autre transducteur 14 (ou un autre premier ensemble de transducteurs 14) est excité individuellement avec un signal électrique impulsionnel afin d'émettre des ultrasons. Ces ultrasons se propagent dans le matériau, et sont acquis ensuite par tous les transducteurs 14, 15 (ou par un autre second ensemble de transducteurs 15). De préférence, chacun des transducteurs 14, 15 émets des ultrasons dans au moins une configuration de sonde à une position **z.** Typiquement chacun des transducteurs 14, 15 est tour-à-tour l'unique transducteur émetteur, tandis que tous les transducteurs 14, 15 acquièrent les ultrasons. Il y a alors autant de configurations que de transducteurs 14, 15.

A partir de la matrice d'acquisition de coefficients *x(z, n, i, j),* le calcul de l'amplitude focalisée du signal peut se résumer par la formule suivante :

$$I(\mathbf{z}, \mathbf{w}) = \sum_{i=1}^{M} \sum_{j=1}^{M} g\big( x(\mathbf{z}, h(\mathbf{w}, i, j), i, j) \big)$$

où M est le nombre de transducteurs 14, 15 de la sonde multi-élément 1, et *h(w, i, j)* est une fonction représentative du trajet des ondes ultrasonores entre le transducteur i qui émet ces ondes et le transducteur j qui les reçoit, en passant par le point sondé **w.** *h(w, i,* j) correspond par exemple au temps de trajet (exprimé en nombre d'échantillon) estimé pour une onde ultrasonore :

- émise par le transducteur i,
- réfléchie par un point du défaut situé au point sondé **w,** et
- acquise par le transducteur j.

Par exemple, il peut s'agir du temps de trajet estimé d'une onde ultrasonore empruntant le chemin court 16 sur la figure 1 entre le transducteur 14 qui émet et le transducteur 15 qui reçoit.

*h(w, i, j)* peut également correspondre à un temps de trajet estimé pour une onde ultrasonore :

- émise par le transducteur i,
- réfléchie par une paroi de fond du matériau, opposé à la surface sur laquelle est disposée la sonde multi-élément 1,
- réfléchie par un point du défaut situé au point sondé w, et
- capté par le transducteur j.

Par exemple, il peut s'agir du temps de trajet estimé d'une onde ultrasonore empruntant le chemin long 17 sur la figure 1 entre le transducteur 14 qui émet et le transducteur 15 qui reçoit, qui est réfléchie par la paroi externe 12 du tube 10. Ce type de trajet est plutôt exploité pour les défauts débouchant sur la paroi externe 12 du tube 10.

Ces temps de trajet peuvent être estimés à partir des vitesses des ondes ultrasonores qui dépendent de la fréquence des ondes ultrasonores et de la nature du matériau inspecté, et également du type de propagation (ondes transversales ou ondes longitudinales). Des conversions de mode de propagation peuvent également être envisagées lors des différentes réflexions.

La fonction g est une fonction qui peut par exemple dépendre de la position du point sondé **w** ou de la vitesse de propagation de l'onde. La fonction g peut également être la fonction valeur absolue, ou le module de signal analytique. L'homme du métier pourra par exemple se reporter des documents présentant différentes méthodes de focalisation en tout point. Par exemple, la thèse de doctorat de physique de Uduardo R. lopez Villaverde d'avril 2017 intitulée "Imagerie Ultrasonore dans des matériaux complexes par focalisation en tous points : Développement d'une méthode de débruitage des images basées sur la décomposition de l'opérateur de retournement temporel", décrit un état de l'art récent de certaines méthodes de focalisation en tout point.

Dans le cas le plus simple l'amplitude focalisée du signal au point sondé **w** pour la position de sonde **z** peut s'écrire :

$$I(\mathbf{z}, \mathbf{w}) = \sum_{i=1}^{M} \sum_{j=1}^{M} x(\mathbf{z}, h(\mathbf{w}, i, j), i, j)$$

ou

$$I(\mathbf{z}, \mathbf{w}) = \sum_{i=1}^{M} \sum_{j=1}^{M} |x(\mathbf{z}, h(\mathbf{w}, i, j), i, j)|$$

On obtient ainsi pour chaque position **z** une image dans laquelle chaque pixel de l'image représente un point sondé **w** du matériau auquel est associé une amplitude focalisée *I(z,w)*.

Une autre méthode de focalisation est la méthode d'imagerie par onde plane, souvent désignée par PWI de l'anglais "Plane Wave Imaging". Dans cette approche, les différentes configurations se distinguent entre elles par des retards différents appliqués à l'émission d'ondes ultrasonores par les transducteurs 14, 15 émetteurs. La méthode PWI repose sur l'émission d'ondes planes en excitant tous les transducteurs14, 15 de façon uniséquentielle, ce qui permet d'orienter et d'augmenter l'amplitude du champ incident dans des directions désirées. Une onde plane incidente est formée en excitant tout ou partie des transducteurs 14, 15 avec un décalage temporel entre les transducteurs 14, 15. En changeant le décalage temporel entre les émissions des transducteurs, l'angle de propagation $\theta_k$ de l'onde plane est modifié. Les différentes configurations utilisent différents angles de propagation $\theta_k$, obtenus par différents décalages temporels, c'est-à-dire différents retards appliqués à l'émission d'ondes ultrasonores. Les transducteurs 14, 15 acquiert alors chacun un signal de mesure représentatif de l'amplitude des ultrasons propagés dans le matériau. Les signaux de mesure reçus à chaque tir ultrasonore sont focalisés en réception en tous points inspectés.

En raison du fait que les transducteurs 14, 15 émettent des ultrasons avec des décalages temporels de façon à émettre une onde plane dans le matériau, cette onde plane présente un angle de propagation qui dépend du décalage temporel entre les transducteurs. En faisant varier ce décalage temporel entre transducteurs 14, 15, on peut émettre des ondes planes avec différents angles de propagation.

A partir de la matrice d'acquisition de coefficients *x(z, n, $\theta_k$, j),* le calcul de l'amplitude focalisée du signal peut alors se résumer par la formule suivante :

$$I(\mathbf{z}, \mathbf{w}) = \sum_{\theta_k=1}^{N_\theta} \sum_{j=1}^{M} g\big( x(\mathbf{z}, h(\mathbf{w}, \theta_k, j), \theta_k, j) \big)$$

où M est le nombre de transducteurs 14, 15 de la sonde multi-élément 1, $\theta_k$ est l'angle de propagation (ou d'incidence) de l'onde plane émise, Ne étant le nombre d'angles de propagation, et donc de décalages temporels différents, et *h(w, $\theta_k$, j)* est une fonction représentative du trajet de l'onde plane d'angle de propagation $\theta_k$ jusqu'au transducteur j qui la reçoit, en passant par le point sondé **w**. *h(w, $\theta_k$, j)* correspond par exemple au temps de trajet (exprimé en nombre d'échantillon) estimé pour :

- une onde plane émise par les transducteurs 14, 15 avec un angle $\theta_k$
- réfléchie par un point du défaut situé au point sondé **w,** et
- acquise par le transducteur j (à noter que l'onde entre le défaut et le transducteur j n'est plus plane).

Comme précédemment, les temps de trajet peuvent être estimés à partir des vitesses des ondes ultrasonores qui dépendent de la fréquence des ondes ultrasonores et de la nature du matériau inspecté, et également du type de propagation (ondes transversales ou ondes longitudinales). De même, la fonction g est une fonction qui peut par exemple dépendre de la position du point sondé $\mathbf{w}$ ou de la vitesse de propagation de l'onde.

Dans le cas le plus simple l'amplitude focalisée du signal au point sondé $\mathbf{w}$ pour la position de sonde $\mathbf{z}$ peut s'écrire :

$$I(\mathbf{z}, \mathbf{w}) = \sum_{\theta_k=1}^{N_\theta} \sum_{j=1}^{M} x(\mathbf{z}, h(\mathbf{w}, \theta_k, j), \theta_k, j)$$

ou

$$I(\mathbf{z}, \mathbf{w}) = \sum_{\theta_k=1}^{N_\theta} \sum_{j=1}^{M} |x(\mathbf{z}, h(\mathbf{w}, \theta_k, j), \theta_k, j)|$$

Quelle que soit l'approche choisie, on dispose alors pour chaque position $\mathbf{z}$ de sonde d'une image dans laquelle chaque pixel de l'image représente un point sondé $\mathbf{w}$ du matériau auquel est associé une amplitude focalisée pour ledit point sondé $\mathbf{w}$ sur différentes positions de sonde $\mathbf{z}$.

Il est à noter que l'image peut être en deux dimensions (si $\mathbf{w}$ est de dimension 2) ou en trois dimensions (si $\mathbf{w}$ est de dimension 3). La détection puis la caractérisation d'un défaut s'effectue ensuite à partir des valeurs prises par cette amplitude focalisée I(z,w), typiquement à partir de la valeur absolue $|I(z,w)|$ de cette amplitude focalisée. A des fins de clarté et de simplification, la référence par la suite à l'amplitude focalisée $I(z,w)$ désignera indifféremment ladite amplitude focalisée $I(z,w)$ ou sa valeur absolue $|I(z,w)|$.

Le bruit de structure observé sur les images issues de TFM présente une inhomogénéité spatiale : l'importance du bruit de structure varie en fonction de la localisation des points sondés $\mathbf{w}$. En particulier, il a tendance à être plus élevé à proximité des transducteurs 14, 15. Il est donc proposé de procéder à un post-traitement des images obtenues visant à homogénéiser puis à réduire le bruit de structure, afin d'améliorer la détection et la caractérisation des défauts.

Le post-traitement proposé repose sur l'exploitation de statistiques tirées de la multiplicité des données disponibles pour un même point sondé $\mathbf{w}$, en raison du fait que des informations sur le même point sondé $\mathbf{w}$ dans le matériau apparaissent dans différentes images relatives à différentes positions $\mathbf{z}$.

L'étape suivante (étape S3) consiste à déterminer, pour chaque point sondé $\mathbf{w}$, une mesure de tendance centrale, notée A($\mathbf{w}$) de l'amplitude focalisée $I(z,w)$ au niveau du point sondé $\mathbf{w}$ sur différentes positions $\mathbf{z}$ de sonde multi-élément 1. Typiquement, la mesure de la tendance centrale A($\mathbf{w}$) est une moyenne ou une médiane. De préférence, la mesure de la tendance centrale est une moyenne A($\mathbf{w}$) de formule générale :

$$A(\boldsymbol{w}) = \beta \left( \sum_{i=1}^{N_s} \sum_{w_j \in V_w} I(\boldsymbol{z_i}, \boldsymbol{w_j}) \right)$$

avec $N_s$ un nombre d'images de différentes positions de sonde $\mathbf{z}$ prises en compte, Ns étant supérieur à 2, $V_w$ un ensemble de points autour du point sondé $\mathbf{w}$ qui peut être réduit au point sondé $\mathbf{w}$, $I(z_i, w_j)$ étant l'amplitude focalisée ou la valeur absolue de l'amplitude à la position $z_i$ pour le point sondé $\mathbf{w}_j$. Par exemple, $\beta = \frac{1}{N_s}$ ou $\beta = \frac{1}{N_s}\frac{1}{N_V}$ ou $\beta = 1$, avec $N_V$ le cardinal de l'ensemble de points $V_w$.

L'ensemble de points $V_w$ inclut le point sondé $\mathbf{w}$, et est de préférence centré autour du point sondé $\mathbf{w}$. Sa taille est choisie en fonction des caractéristiques du bruit de structure et des images utilisées. Par exemple, l'ensemble de points $V_w$ pourra être choisi d'autant plus grand que le nombre d'images $N_s$ de différentes positions de sonde $\mathbf{z}$ prises en compte est faible. En effet, prendre en compte le voisinage du point sondé $\mathbf{w}$ permet de calculer la mesure de la tendance centrale sur suffisamment de points et ainsi d'obtenir une meilleure estimation de cette mesure de tendance centrale. Toutefois, l'ensemble de points $V_w$ regroupe de préférence moins de 100 points autour du point sondé $\mathbf{w}$, afin de conserver l'aspect local de la mesure de la tendance centrale, qui doit rester représentative de l'amplitude focalisée au niveau du point sondé **w,** c'est-à-dire à ses abords immédiats. A l'inverse, si le nombre d'images $N_s$ de différentes positions de sonde **z** prises en compte est suffisamment important, l'ensemble de points $V_w$ peut être réduit, jusqu'à ne correspondre qu'au point sondé **w** (auquel cas $N_v$ est égal à 1).

De préférence, $\beta = \frac{1}{N_s}\frac{1}{N_V}$ et c'est la valeur absolue de l'amplitude focalisée qui est utilisée, ce qui donne :

$$A(\boldsymbol{w}) = \frac{1}{N_s}\frac{1}{N_V}\sum_{i=1}^{N_s}\sum_{w_j \in V_w}\left|I(\boldsymbol{z_i},\ \boldsymbol{w_j})\right|$$

L'étape suivante (étape S4) consiste à déterminer, pour chaque point sondé **w,** une fonction B(**w**) représentative de la variabilité de l'amplitude focalisée au niveau de ce point sondé **w** sur les différentes positions **z** de la sonde multi-élément 1. La fonction B(**w**) est typiquement de formule générale :

$$B(\boldsymbol{w}) = \left(\beta'\sum_{i=1}^{N_s'}\sum_{w_j \in V_w'}\left|I(\boldsymbol{z_i},\ \boldsymbol{w_j}) - A(\boldsymbol{w})\right|^{\propto'}\right)^{\gamma'}$$

avec $\propto'$, $\beta'$ et y' différents de zéro, $N_s'$ un nombre d'images de différentes positions **z** de sonde, $V_w'$ un ensemble de points autour du point sondé **w** qui peut être réduit au point sondé **w,** $N_v'$ le cardinal de $V_w'$. De préférence, $I(z,w)$ désigne ici la valeur absolue de l'amplitude focalisée.

Pour l'ensemble de points $V_w'$, les mêmes considérations que pour l'ensemble de points $V_w$ servant à déterminer la fonction A(**w**) s'appliquent. Il est à noter que si l'ensemble de points $V_w'$ servant à déterminer la fonction B(**w**) peut être différent de l'ensemble de points $V_w$ servant à déterminer la fonction A(**w**), il est préférable pour des raisons de cohérence de prendre le même ensemble de points, et donc de préférence $V_w'= V_w$ et $N_v'=N_v$.

De préférence :

- soit $\propto'$=2 et y'=0,5, soit $\propto'$=1 et $\gamma'$=1, et
- $\beta' = \frac{1}{N_s'}$ ou $\beta' = \frac{1}{N_s'-1}$ ou $\beta' = \frac{1}{N_s'}\frac{1}{N_{V'}}$ ou $\beta$ = 1, avec $N_s'$ le nombre de positions z prises en compte, $N_s'$ étant supérieur à 2, et $N_v$ le cardinal de l'ensemble $V_w$ de points autour du point sondé **w.**

Préférentiellement :

$$B(w) = \sqrt{\frac{1}{N_s}\frac{1}{N_V}\sum_{i=1}^{N_s}\sum_{w_j \in V_w}\left||I(\boldsymbol{z_i},\ \boldsymbol{w_j})| - A(w)\right|^2}$$

Une fois que la mesure de la tendance centrale A(**w**) de l'amplitude focalisée $I(z,w)$ et que la fonction B(**w**) représentative de la variabilité de l'amplitude focalisée $I(z,w)$ ont été déterminées, il est possible de corriger (étape S5) sur chaque image les amplitudes associées au point sondé **w** considéré. Cette correction est faite en soustrayant à l'amplitude focalisée $I(z,w)$ la mesure de tendance centrale A(**w**) et en divisant par la fonction B(**w**) représentative de la variabilité. On obtient alors une amplitude corrigée $I_c(z,w)$ :

$$I_c(\boldsymbol{z},\boldsymbol{w}) = (I(\boldsymbol{z},\boldsymbol{w}) - A(\boldsymbol{w}))/\,B(\boldsymbol{w})$$

De préférence, c'est la valeur absolue $|I(z,w)|$ de l'amplitude focalisée qui est utilisée.

On obtient alors des images corrigées qui peuvent être utilisées pour détecter et caractériser les défauts du matériau (étape S6), avec une mise en évidence améliorée des défauts, et une meilleure caractérisation de ceux-ci grâce à la correction proposée.

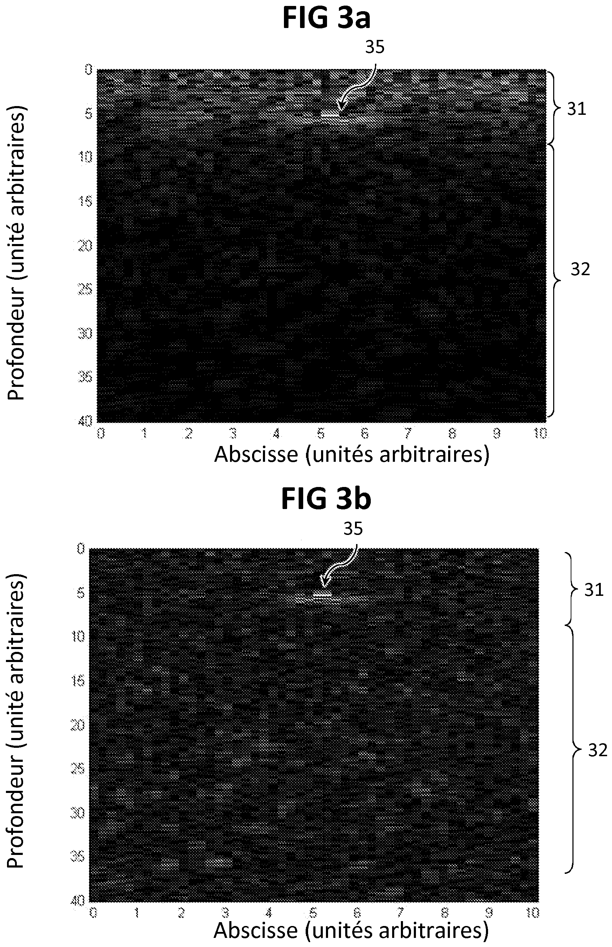

Les figures 3a et 3b illustrent la mise en oeuvre de la normalisation sur un exemple d'une image issue d'une TFM pour une position **z** de la sonde multi-élément 1. Ces images sont issues de mesure sur une maquette présentant un défaut 13 de 0,5 mm de diamètre situé à une profondeur de 5 mm. L'axe vertical représente la profondeur (en unités arbitraires), et l'axe horizontal l'abscisse (en unités arbitraires). Dans ces figures, une teinte sombre indique une valeur faible, tandis qu'une teinte claire indique une valeur élevée. S'agissant d'une seule image correspondant donc à une unique position **z** de la sonde multi-élément 1, l'amplitude focalisée $I(z,w)$ peut être notée simplement $I(w)$. De même, l'amplitude corrigée peut être notée $I_c(w)$. Dans les exemples qui suivent, la position d'un point sondé **w** étant repérée par une abscisse a et une profondeur p, on pourra noter l'amplitude focalisée $I(a, p)$ et l'amplitude corrigée $I_c(a, p)$

La figure 3a est donc un exemple d'image, avant la mise en oeuvre de la correction. On constate que l'image présente un dégradé rapide depuis le haut de l'image, correspondant à la surface 11, depuis des valeurs élevées (teintes claires) vers des valeurs plus faibles (teintes sombres), de sorte que l'image peut être divisée en deux parties : une partie haute 31 présentant des teintes claires, et une partie basse 32 présentant uniquement des teintes sombres. La présence du défaut 13 dans le matériau se matérialise par une zone claire 35 dans la partie haute 31, qui ne se distingue toutefois peu des teintes claires de cette partie haute 31.

La figure 3b est un exemple d'image corrigée correspondant à l'image de la figure 3a après mise en oeuvre de la correction proposée. Par comparaison avec l'image de la figure 3a, on constate que la partie haute 31 ne se distingue plus de la partie haute 32. Le dégradé de teintes a en effet disparu de la partie haute 31, tandis que des zones claires isolées et de faibles étendues sont apparues tant dans la partie haute 31 que dans la partie basse 32, qui ne présente donc plus uniquement des teintes sombres. En revanche, la zone claire 35 correspondant à la présence du défaut 13 se distingue désormais nettement dans la partie haute. La correction proposée a donc permis de mettre en évidence la présence du défaut dans la partie haute 31. En outre, la modification des amplitudes corrigées dans la partie basse 32 a permis de s'assurer de l'absence de défaut dans cette partie basse 32. En effet, la présence d'un éventuel défaut dans la partie basse 32 ne serait pas apparue dans l'image de la figure 3a en raison du fait que les amplitudes focalisées auraient été tellement faibles qu'elles ne se seraient pas distinguées du bruit de structure. Le procédé de correction aurait permis de mettre en évidence un éventuel défaut, comme le montre les zones claires isolées et de faibles étendues apparues dans la partie basse 32.

Il reste encore à détecter et à caractériser les défauts par la détection de leur signature dans le signal dérivé. A cet égard, la détection et la caractérisation des défauts est préférentiellement effectuée à partir de l'image. Les défauts tels que les entailles peuvent s'étendre sur plusieurs dizaines de millimètres. Les points de l'image au niveau de ce défaut présentent ainsi non seulement des amplitudes corrigées plus élevées que les points qui les entourent, mais leurs amplitudes sont inter-corrélés entre elles, c'est-à-dire qu'elles présentent une cohérence sur plusieurs positions spatialement adjacentes au niveau du défaut. En revanche, en l'absence de signature d'un défaut dans une image, avec uniquement du bruit, l'image présente une bien plus faible inter-corrélation autour d'un point quelconque. Ainsi, chaque entaille peut être repérée par une persistance spatiale sur l'image suivant l'abscisse et/ou la profondeur où elle apparaît.

On exploite donc cette cohérence spatiale pour mettre en valeur le signal utile représentatif des défauts au détriment du bruit, moins corrélé spatialement. Un filtrage spatial exploitant cette corrélation spatiale peut donc être mis en oeuvre sur l'image corrigée, en appliquant un filtre spatial à l'image corrigée afin de la filtrer spatialement. Le filtre spatial est conçu pour permettre d'atténuer la variabilité du bruit de structure, caractérisée par l'écart-type spatial de la distribution de ses amplitudes, tout en conservant le niveau de la signature d'un défaut qui se traduit dans l'amplitude corrigée de l'image corrigée.

Le filtre est dit spatial car il n'implique pas de considérations temporelles, l'image corrigée présentant des amplitudes corrigées variant spatialement, sans variation temporelle. Le filtre spatial peut être un filtre à une dimension appliqué sur la composante d'abscisse a, c'est-à-dire que pour chaque profondeur p on filtre les amplitudes corrigées $I_c(a)$, et/ou sur la composante de profondeur p, c'est-à-dire que pour chaque abscisse a on filtre les amplitudes corrigées $I_c(p)$.

Le filtre spatial peut être un filtre passe-bas. La fréquence spatiale de coupure du filtre spatial passe-bas peut être choisie en fonction de la taille minimale $\Delta L_{min}$ des défauts que l'on cherche à détecter, comme étant l'inverse de cette taille minimale $\Delta L_{min}$. Ainsi, pour détecter des défauts d'au moins 10 mm, la fréquence spatiale de coupure est donc choisie comme étant inférieure à 100 m$^{-1}$. Le filtre spatial est typiquement un filtre de Butterworth.

Le filtre spatial peut également être un filtre spatial passe-bas en deux dimensions appliqué sur l'image corrigée. La réponse en fréquence en deux dimensions peut être choisie en fonction de la taille minimale des défauts recherchés, de même que pour un filtre spatial uni-dimensionnel. Le filtre spatial peut encore être un filtre médian.

Il est également possible d'utiliser en tant que filtre spatial un filtre bilatéral, qui permet de moyenner les valeurs d'amplitude focalisée de pixels voisins uniquement si ces valeurs sont proches. Cela permet de lisser le bruit sans diminuer l'amplitude moyenne d'un éventuel défaut, augmentant ainsi le contraste de l'image et mettant en évidence l'éventuel défaut. La mise en oeuvre de la correction proposée est alors particulièrement avantageuse puisqu'elle permet d'homogénéiser la variabilité du bruit dans l'ensemble de l'image corrigée.

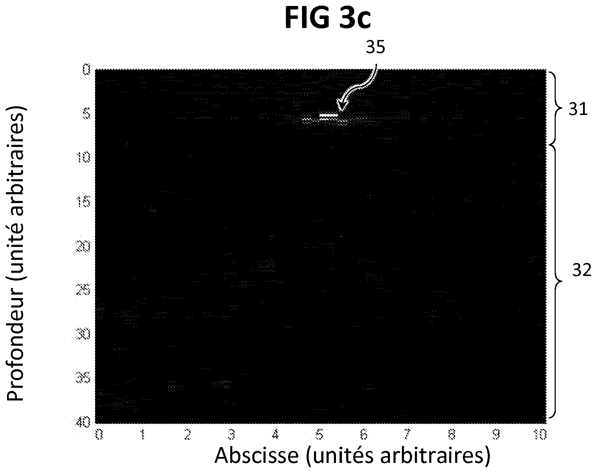

La figure 3c est un exemple d'une image filtrée résultant d'un filtrage spatial au moyen d'un filtre bilatéral sur l'image corrigée de la figure 3b. On constate que la zone claire 35 correspondant à la présence du défaut 13 est la seule information présente dans l'image corrigée filtrée, tous les bruits ayant été éliminés par le filtrage spatial. L'image corrigée ainsi filtrée permet d'obtenir une carte de détection des défauts. En effet, la signature apparaît sur l'image corrigée, notamment par une amplitude corrigée différente des alentours, ce qui permet de les détecter, mais également de les localiser. En effet, une image corrigée est une représentation spatiale, et chaque point est localisé par sa profondeur et son abscisse.

Une méthode simple de détection consiste à utiliser un seuil donné : tout dépassement de seuil par un ensemble de points sondés w adjacents sur l'image corrigée signale la présence d'un défaut. D'autres méthodes plus complexes peuvent être bien entendu mises en œuvre.

Le procédé décrit est typiquement mis en oeuvre par un ordinateur pourvu d'un processeur et d'une mémoire. A cet effet, il est proposé un produit programme d'ordinateur comprenant des instructions de code de programme enregistrées sur support tangible non-transitoire lisible par ordinateur pour l'exécution du procédé selon l'une quelconque des revendications précédentes, lorsque ledit programme est exécuté sur un ordinateur.

L'étendue de la protection est définie par les revendications.

**Revendications**

1. Procédé de détection et de caractérisation par ultrasons de défauts dans un matériau hétérogène, comprenant les étapes suivantes :

   a) pour chacune d'une pluralité de positions (z) à la surface du matériau,

      - une sonde multi-élément (1) comprenant une pluralité de transducteurs (14, 15) est disposée à la position (z) à la surface (11) du matériau ;
      - pour une pluralité de configurations de la sonde multi-élément (1), des ultrasons sont émis (S11) par au moins un transducteur émetteur (14) et au moins un transducteur récepteur (15) acquiert (S12) un signal de mesure représentatif de l'amplitude des ultrasons propagés dans le matériau en fonction du temps pour cette configuration de sonde à cette position (z), les différentes configurations se distinguant entre elles par des retards différents appliqués à l'émission d'ondes ultrasonores par les transducteurs ou par des fonctions d'émetteur ou de récepteur remplies par différents transducteurs (14, 15),

   b) mise en oeuvre d'un algorithme de focalisation sur un ensemble de données de mesure regroupant les signaux de mesure pour les différentes configurations de la sonde multi-élément (1) pour chaque position (z) de la sonde multi-élément (1), et obtention (S2) pour chaque position (z) de sonde d'une image dans laquelle chaque pixel de l'image représente un point sondé (w) du matériau auquel est associé une amplitude focalisée pour ledit point sondé (w) sur différentes positions de sonde (z),
   c) pour chaque point sondé (w), détermination (S3) d'une mesure de tendance centrale de l'amplitude focalisée au niveau du point sondé sur différentes positions de sonde (z),
   d) pour chaque point sondé (w), détermination (S4) d'une fonction représentative de la variabilité de l'amplitude focalisée au niveau de ce point sondé (w) sur différentes positions de sonde (z),
   e) pour chaque image, correction (S5) de l'amplitude focalisée en chaque point sondé (w) en soustrayant à l'amplitude la mesure de la tendance centrale et en divisant par la fonction représentative de la variabilité, pour obtenir des images corrigées,
   f) détection et caractérisation (S6) des défauts du matériau à partir des images corrigées.

2. Procédé selon la revendication précédente, dans lequel les différentes configurations se distinguent entre elles par des fonctions d'émetteur ou de récepteur remplies par différents transducteurs (14, 15), et l'algorithme de focalisation est un algorithme de focalisation en tout point.

3. Procédé selon la revendication 1, dans lequel les différentes configurations se distinguent entre elles par différents décalages temporels entre transducteurs appliqués à l'émission d'ondes ultrasonores par les transducteurs, et l'algorithme de focalisation est une imagerie par onde plane.

4. Procédé selon la revendication 1, dans lequel la mesure de la tendance centrale est une moyenne ou une médiane.

5. Procédé selon la revendication 4, dans lequel la mesure de la tendance centrale est une moyenne A(w) de formule générale :

$$A(w) = \beta \left( \sum_{i=1}^{N_s} \sum_{w_j \in V_w} I(\boldsymbol{z_i}, \boldsymbol{w_j}) \right)$$

avec $N_s$ un nombre d'images de différentes positions de sonde (z) prises en compte, Ns étant supérieur à 2, $V_w$ un ensemble de points autour du point w qui peut être réduit au point w, $I(\boldsymbol{z_i}, \boldsymbol{w_j})$ étant l'amplitude ou la valeur absolue de l'amplitude focalisée à la position de sonde $\boldsymbol{z_i}$; pour le point $\boldsymbol{w_i}$.

6. Procédé selon la revendication 5, dans lequel $\beta = \frac{1}{N_s}$ ou $\beta = \frac{1}{N_s}\frac{1}{N_V}$ ou $\beta = 1$, avec $N_v$ le cardinal de l'ensemble de points $V_w$.

7. Procédé selon l'une des revendications précédentes, dans lequel la mesure de la tendance centrale est une moyenne A(w) de formule générale :

$$A(w) = \frac{1}{N_s}\frac{1}{N_V} \sum_{i=1}^{N_s} \sum_{w_j \in V_w} \left| I(\boldsymbol{z_i}, \boldsymbol{w_j}) \right|$$

avec $N_s$ un nombre d'images de différentes positions de sonde (z) prises en compte, Ns étant supérieur à 2, $V_w$ un ensemble de points autour du point w qui peut être réduit au point w, $I(\boldsymbol{z_i}, \boldsymbol{w_j})$ étant l'amplitude à la position de sonde $\boldsymbol{z_i}$ pour le point sondé $\boldsymbol{w_j}$, et $N_v$ le cardinal de l'ensemble de points $V_w$.

8. Procédé selon l'une des revendications précédentes, dans lequel la fonction B(w) représentative de la variabilité de l'amplitude pour ce point sondé **w** sur les différentes positions de sonde (z), est de formule générale

$$B(\boldsymbol{w}) = \left( \beta' \sum_{i=1}^{N_s'} \sum_{w_j \in V_w'} \left| I(\boldsymbol{z_i}, \boldsymbol{w_j}) - A(\boldsymbol{w}) \right|^{\propto'} \right)^{\gamma'}$$

avec $\propto'$, $\beta'$ et y' différents de zéro, $N_s'$ un nombre d'images de différentes positions de sonde (z), $V_w'$ un ensemble de points autour du point w qui peut être réduit au point w, et A(w) la mesure de la tendance centrale.

9. Procédé selon la revendication précédente, dans lequel

• soit A(**w**) est la moyenne, soit A(**w**) est la médiane sur l'ensemble de points $V_w$, et
• soit $\propto'$=2 et y'=0,5, soit $\propto'$=1 et $\gamma'$=1, et
• $\beta' = \frac{1}{N_s'}$ ou $\beta' = \frac{1}{N_s'-1}$ ou $\beta' = \frac{1}{N_s'}\frac{1}{N_V'}$ ou $\beta = 1$, avec $N_s'$ le nombre de positions z prises en compte, $N_s'$ étant supérieur à 2, et $N_v'$ le cardinal de l'ensemble $V_w'$ de points autour du point w.

10. Procédé selon l'une des revendications précédentes, dans lequel la fonction B(**w**) représentative de la variabilité de l'amplitude au niveau de ce point sondé **(w)** sur les différentes positions de sonde **(z)** est de formule générale

$$B(w) = \sqrt{\frac{1}{N_s}\frac{1}{N_V} \sum_{i=1}^{N_s} \sum_{w_j \in V_w} \left| \left| I(\boldsymbol{z_i}, \boldsymbol{w_j}) \right| - A(w) \right|^2}$$

avec $N_s$ un nombre d'images de différentes positions de sonde (z), $V_w$ un ensemble de points autour du point sondé

**w** qui peut être réduit au point sondé **w,** $I(\mathbf{z}_i, \mathbf{w}_j)$ étant l'amplitude focalisée à la position de sonde $\mathbf{z}_i$ pour le point sondé $\mathbf{w}_j$, $N_v$ le cardinal de $V_w$, et A(**w**) une mesure de tendance centrale de l'amplitude focalisée au niveau du point sondé sur différentes positions de sonde (z).

11. Procédé selon l'une des revendications précédentes, dans lequel la détection des défauts comprend une étape de filtrage spatial d'au moins une image corrigée au moyen d'un filtre bilatéral, et de comparaison avec un seuil.

12. Produit programme d'ordinateur comprenant des instructions de code de programme enregistrées sur support tangible non-transitoire lisible par ordinateur pour l'exécution des étapes b) à f) du procédé selon l'une quelconque des revendications précédentes, lorsque ledit programme est exécuté sur un ordinateur.

**Patentansprüche**

1. Verfahren zur Detektion und Charakterisierung über Ultraschall von Defekten in einem heterogenen Material, die folgenden Schritte umfassend:

   a) für jede aus einer Pluralität von Positionen **(z)** an der Oberfläche des Materials

   - eine Multi-Element-Sonde (1), umfassend eine Vielzahl von Wandlern (14, 15), wird an der Position **(z)** an der Oberfläche (11) des Materials bereitgestellt;
   - für eine Vielzahl von Konfigurationen der Multi-Element-Sonde (1) wird Ultraschall ausgesendet (S11) über wenigstens einen Sendewandler (14) und wenigstens ein Empfangswandler (15) erhält (S12) ein Messsignal, repräsentativ für die Amplitude des in dem Material ausgebreiteten Ultraschalls, gemäß der Zeit für diese Konfiguration der Sonde in dieser Position (z), wobei sich die verschiedenen Konfigurationen untereinander unterscheiden durch verschiedene Verzögerungen, angewandt auf die Emission von Ultraschallwellen durch die Wandler oder durch Sende- oder Empfangswandler, gefüllt über verschiedene Mittler (14, 15),

   b) Anwenden eines Fokalisierungsalgorithmus auf einen Satz von Messdaten, die Messsignale für die verschiedenen Konfigurationen der Multi-Element-Sonde (1) für jede Position (z) der Multi-Element-Sonde (1) zusammenfassend, und Erlangen (S2) für jede Position **(z)** der Sonde eines Bildes, in welchem jedes Pixel des Bildes einen sondierten Punkt **(w)** des Materials repräsentiert, mit dem eine Amplitude assoziiert ist, welche für den sondierten Punkt **(w)** auf verschiedenen Positionen der Sonde **(z)** assoziiert ist,
   c) für jeden sondierten Punkt **(w)** Bestimmung (S3) einer Messung der zentralen Tendenz der fokussierten Amplitude auf der Ebene des sondierten Punktes auf verschiedenen Positionen der Sonde **(z),**
   d) für jeden sondierten Punkt **(w)** Bestimmung (S4) einer Funktion repräsentativ für die Variabilität der zentralen Tendenz der fokussierten Amplitude auf der Ebene des sondierten Punktes **(w)** auf verschiedenen Positionen der Sonde **(z),**
   e) für jedes Bild Korrektur (S5) der auf jedem sondierten Punkt **(w)** fokussierten Amplitude, wobei die Amplitude der Messung von der zentralen Tendenz substrahiert und durch die Funktion repräsentativ für die Variabilität dividiert wird, um korrigierte Bilder zu erhalten,
   f) Detektion und Charakterisierung (S6) von Defekten des Materials anhand der korrigierten Bilder.

2. Verfahren nach dem vorhergehenden Anschluss, in welchem die verschiedenen Konfigurationen sich durch Sender- oder Empfängerfunktionen voneinander unterscheiden, erfüllt von unterschiedlichen Mittlern (14, 15), und es sich bei dem Fokussierungsalgorithmus um einen Fokussierungsalgorithmus an jedem Punkt handelt.

3. Verfahren nach Anspruch 1, in welchem die verschiedenen Konfigurationen sich voneinander unterscheiden durch verschiedene zeitliche Versetzungen zwischen Mittlern, angewandt auf die Sendung von Ultraschallwellen über Mittler, und es sich bei dem Fokussierungsalgorithmus um eine Flachwellenbildgebung handelt.

4. Verfahren nach Anspruch 1, in dem es sich bei der Messung der zentralen Tendenz um einen Mittelwert oder ein Medianwert handelt.

5. Verfahren nach Anspruch 4, in dem es sich bei Messung der zentralen Tendenz um einen Mittelwert A(w) handelt, der die allgemeine Formel:

$$A(w) = \beta \left( \sum_{i=1}^{N_s} \sum_{w_j \in V_w} I(z_i, w_j) \right)$$

hat, wobei $N_s$ eine Anzahl an Abbildungen von verschiedenen in Betracht gezogenen Positionen der Sonde (z) ist, wobei $N_s$ höher ist als 2, $V_w$ als Satz von Punkten um den Punkt w, die auf den Punkt w reduziert werden kann, wobei $I(z_i, w_j)$ die Amplitude oder der absolute Wert der Amplitude ist, die an der Position der Sonde $z_i$ für den Punkt $w_j$ fokussiert wurde.

6. Verfahren nach Anspruch 5, in welchem $\beta = \frac{1}{N_s}$ oder $\beta = \frac{1}{N_s}\frac{1}{N_V}$ oder $\beta = 1$ ist, wobei $N_V$ die Kardinalzahl der Menge der Punkte $V_w$ ist.

7. Verfahren nach einem der vorhergehenden Ansprüche, in dem es sich bei der Messung der zentralen Tendenz um einen Mittelwert A(w) handelt, der allgemeinen Formel:

$$A(w) = \frac{1}{N_s}\frac{1}{N_V} \sum_{i=1}^{N_s} \sum_{w_j \in V_w} \left| I(z_i, w_j) \right|$$

hat, wobei $N_s$ eine Anzahl an Abbildungen von verschiedenen in Betracht gezogenen Positionen der Sonde (z) ist, wobei $N_s$ höher ist als 2, $V_w$ als ein Satz von Punkten um den Punkt w, die auf den Punkt w reduziert werden kann, wobei $I(z_i, w_j)$ die Amplitude an der Sondenposition $z_i$ für den sondierten Punkt $w_j$ ist und $N_V$ die Kardinalzahl der Satz von Punkten $V_w$.

8. Verfahren nach einem der vorhergehenden Ansprüche, in welchem die Funktion B(w), repräsentativ für die Variabilität der Amplitude für diesen sondierten Punkt w auf den verschiedenen Positionen der Sonde (z) ist, der die allgemeine Formel

$$B(w) = \left( \beta' \sum_{i=1}^{N_s'} \sum_{w_j \in V_w'} \left| I(z_i, w_j) - A(w) \right|^{\alpha'} \right)^{\gamma'}$$

hat, wobei $\alpha'$, $\beta'$ und y' nicht null sind, $N_s'$ eine Anzahl von Bildern von verschiedenen Positionen der Sonde (z) ist, $V_w'$ ein Satz von Punkten um einen Punkt w ist, die auf den Punkt w reduziert werden kann, und A(**w**) die Messung der zentralen Tendenz ist.

9. Verfahren nach dem vorhergehenden Anspruch, wobei

   • entweder A(**w**) der Mittelwert ist oder A(**w**) der Medianwert des Satzes der Punkte $V_w$ ist und
   • entweder $\alpha'=2$ und y'=0,5 oder $\alpha'=1$ et $\gamma'=1$ und
   • $\beta' = \frac{1}{N_s'}$ oder $\beta' = \frac{1}{N_s'-1}$ oder $\beta' = \frac{1}{N_s'}\frac{1}{N_V'}$ oder $\beta' = 1$, wobei $N_s'$ die Anzahl der in Betracht gezogenen Positionen z ist, wobei $N_s'$ höher ist als 2 und $N_V'$ die Kardinalzahl des Satzes $V_w'$ der Punkte um den Punkt w ist.

10. Verfahren nach einem der vorhergehenden Ansprüche, in welchem die Funktion B(**w**), repräsentativ für die Variabilität der Amplitude auf der Ebene des sondierten Punkt (**w**) auf den verschiedenen Sondenpositionen (**z**), die allgemeine Formel

$$B(w) = \sqrt{\frac{1}{N_S}\frac{1}{N_V}\sum_{i=1}^{N_S}\sum_{w_j \in V_w} \left\| |I(\boldsymbol{z_i}, \boldsymbol{w_j})| - A(w) \right\|^2}$$

hat, wobei $N_s$ eine Anzahl von Bildern von verschiedenen Positionen der Sonde (z) ist, wobei $V_w$ ein Satz von Punkten um den sondierten Punkt **w** ist, der auf den sondierten Punkt **w** reduziert werden kann, wobei $I(\boldsymbol{z_i}, \boldsymbol{w_j})$ die Amplitude ist fokussiert auf die Position der Sonde $z_i$ für den sondierten Punkt $\boldsymbol{w_j}$, wobei $N_v$ die Kardinalzahl von $V_w$ ist und A(**w**) eine Messung der allgemeinen Tendenz der Amplitude ist, fokussiert auf die Ebene des sondierten Punktes **(z).**

11. Verfahren nach einem der vorhergehenden Ansprüche, in welchem die Detektion der Defekte einen Schritt der räumlichen Filtrierung von wenigstens einem korrigierten Bild mittels eines bilateralen Filters und den Abgleich mit einer Schwelle umfasst.

12. Computerprogrammprodukt, Programmcodeanweisungen umfassend, gespeichert auf dem materiellen, nicht-transitorischen, computerlesbaren Medium für die Ausführung der Schritte b) bis f) des Verfahrens nach einem der vorhergehenden Ansprüche, wobei das Programm auf einem Computer ausgeführt wird.

## Claims

1. Method for the ultrasound detection and characterisation of defects in a heterogeneous material, comprising the following steps:

   a) for each of a plurality of positions **(z)** at the surface of the material,

   - a multi-element probe (1) comprising a plurality of transducers (14, 15) is disposed at the position **(z)** at the surface (11) of the material;
   - for a plurality of configurations of the multi-element probe (1), ultrasound is emitted (S11) by at least one emitting transducer (14) and at least one receiving transducer (15) acquires (S12) a measurement signal representative of the amplitude of the ultrasound propagated in the material as a function of the time for this probe configuration at this position **(z),** the different configurations being distinguished from one another by different delays applied to the emission of ultrasonic waves by the transducers or by emitter or receiver functions fulfilled by different transducers (14, 15),

   b) implementing a focusing algorithm on a measurement data set grouping together the measurement signals for the different configurations of the multi-element probe (1) for each position **(z)** of the multi-element probe (1), and obtaining (S2) for each probe position **(z)** an image in which each pixel of the image represents a probed point **(w)** of the material with which a focused amplitude is associated for said probed point **(w)** on different probe positions **(z),**
   c) for each probed point **(w),** determining (S3) a measurement of central tendency of the focused amplitude at the probed point on different probe positions **(z),**
   d) for each probed point **(w),** determining (S4) a function representative of the variability of the focused amplitude at this probed point **(w)** on different probe positions **(z),**
   e) for each image, correcting (S5) the focused amplitude at each probed point **(w)** by subtracting the measure of central tendency from the amplitude and by dividing by the function representative of the variability, in order to obtain corrected images,
   f) detecting and characterising (S6) defects in the material based on the corrected images.

2. Method according to the preceding claim, wherein the different configurations can be distinguished from one another by emitter or receiver functions fulfilled by different transducers (14, 15), and the focusing algorithm is a total focusing algorithm.

3. Method according to claim 1, wherein the different configurations can be distinguished from one another by different temporal offsets between transducers applied to the emission of ultrasonic waves by the transducers, and the focusing algorithm is a plane wave imaging.

4. Method according to claim 1, wherein the measure of central tendency is an average or a median.

5. Method according to claim 4, wherein the measure of central tendency is an average A(w) having general formula:

$$A(w) = \beta \left( \sum_{i=1}^{N_S} \sum_{w_j \in V_w} I(\boldsymbol{z_i}, \boldsymbol{w_j}) \right)$$

with $N_s$ a number of images of different probe positions (z) taken into account, Ns being greater than 2, $V_w$ a set of points around the point w that can be reduced to the point w, $I(\boldsymbol{z_i}, \boldsymbol{w_j})$ being the amplitude or the absolute value of the focused amplitude at the probe position $\boldsymbol{z_i}$ for the point $\boldsymbol{w_j}$.

6. Method according to claim 5, wherein $\beta = \dfrac{1}{N_S}$ or $\beta = \dfrac{1}{N_S} \dfrac{1}{N_V}$ or $\beta = 1$, with $N_v$ the cardinal of the set of points $V_w$.

7. Method according to one of the preceding claims, wherein the measure of central tendency is an average A(w) having general formula:

$$A(w) = \frac{1}{N_S} \frac{1}{N_V} \sum_{i=1}^{N_S} \sum_{w_j \in V_w} \left| I(\boldsymbol{z_i}, \boldsymbol{w_j}) \right|$$

with $N_s$ a number of images of different probe positions (z) taken into account, Ns being greater than 2, $V_w$ a set of points around the point w that can be reduced to the point w, $I(\boldsymbol{z_i}, \boldsymbol{w_j})$ being the amplitude at the probe position $\boldsymbol{z_i}$ for the probed point $\boldsymbol{w_j}$, and $N_v$ the cardinal of the set of points $V_w$.

8. Method according to one of the preceding claims, wherein the function B(w) representative of the variability of the amplitude for this probed point **w** on the different probe positions (z), has general formula

$$B(\boldsymbol{w}) = \left( \beta' \sum_{i=1}^{N_S'} \sum_{w_j \in V_w'} \left| I(\boldsymbol{z_i}, \boldsymbol{w_j}) - A(w) \right|^{\propto'} \right)^{\gamma'}$$

with $\propto'$, $\beta'$ and y' different from zero, $N_s'$ a number of images of different probe positions (z), $V_w'$ a set of points around the point w that can be reduced to the point w, and A(**w**) the measure of central tendency.

9. Method according to the preceding claim, wherein

 • either A(**w**) is the average, or A(**w**) is the median over the set of points $V_w$, and
 • either $\propto'$=2 and y'=0.5, or $\propto'$=1 and $\gamma'$=1, and
 • $\beta' = \dfrac{1}{N_S'}$ or $\beta' = \dfrac{1}{N_S'-1}$ or $\beta' = \dfrac{1}{N_S'} \dfrac{1}{N_V'}$ or $\beta' = 1$, with $N_s'$ the number of positions z taken into account, $N_s'$ being greater than 2, and $N_v'$ the cardinal of the set $V_w'$ of points around the point w.

10. Method according to one of the preceding claims, wherein the function B(**w**) representative of the variability of the amplitude at this probed point **(w)** on the different probe positions **(z)** has general formula

$$B(w) = \sqrt{\frac{1}{N_s}\frac{1}{N_V}\sum_{i=1}^{N_s}\sum_{w_j \in V_w}\Big|\big|I(\boldsymbol{z_i},\,\boldsymbol{w_j})\big| - A(w)\Big|^2}$$

with $N_s$ a number of images of different probe positions (z), $V_w$ a set of points around the probed point **w** that can be reduced to the probed point **w**, $I(\boldsymbol{z_i},\,\boldsymbol{w_j})$ being the focused amplitude at the probe position $\boldsymbol{z_i}$ for the probed point $\boldsymbol{w_j}$, $N_v$ the cardinal of $V_w$, and A(**w**) a measure of central tendency of the focused amplitude at the probed point on different probe positions **(z).**

11. Method according to one of the preceding claims, wherein the detection of defects comprises a step of spatial filtering of at least one corrected image by means of a bilateral filter, and of comparing with a threshold.

12. Computer program product comprising program code instructions recorded on a non-transitory tangible medium that can be read by a computer for the execution of the steps b) to f) of the method according to any preceding claim, when said program is executed on a computer.

# FIG 1

# FIG 2

Pour une pluralité de configurations de sonde

Pour une pluralité de positions de sonde

Emission des ultrasons — S11

Réception des ultrasons — S12

S1

Obtention d'une image par une méthode de focalisation — S2

Détermination d'une mesure de tendance centrale — S3

Détermination de la fonction représentative de de la variabilité de l'amplitude focalisée — S4

Correction de l'amplitude — S5

Détection et caractérisation des défauts — S6

# FIG 3a

35

# FIG 3b

35

# FIG 3c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070006651 A1

- WO 2016083759 A

**Littérature non-brevet citée dans la description**

- **UDUARDO R. LOPEZ VILLAVERDE.** Imagerie Ultrasonore dans des matériaux complexes par focalisation en tous points : Développement d'une méthode de débruitage des images basées sur la décomposition de l'opérateur de retournement temporel. *thèse de doctorat de physique,* Avril 2017